# EUROPEAN PATENT APPLICATION

(11) **EP 1 382 440 A1**
(43) Date of publication of application: **21.01.2004**
(21) Application number: 03425455.7
(22) Date of filing: 10.07.2003
(51) Int. Cl.: B32B 15/01

(54) **A bilaminate and a method for making products from the bilaminate**

(30) Priority: 16.07.2002 IT BO20020456
(71) Applicant: Bomet S.r.l., 40017 San Giovanni in Persiceto (Bologna) (IT)
(72) Inventor: Lanzarini, Dante, 40131 Bologna (IT)
(74) Representative: Lanzoni, Luciano

(57) **Abstract**

The product (5) is made from a bilaminate (1) comprising a precious metal leaf (2) applied to a copper supporting sheet (3).

## Description

The present invention relates to a bilaminate and preferably to a silver bilaminate.

The term silver bilaminate refers to a structure consisting of a metal supporting sheet on top of which a thin silver leaf is glued by inserting an adhesive substance between the two.

This bilaminate is normally used to produce picture frames, fancy sweet boxes, decorations for boxes and packages and other gift items, hereinafter referred to generically as "products".

In prior art the bilaminate is normally obtained by applying the silver leaf to an aluminium sheet whose thickness may vary, generally, from 0.30 to 0.50 mm.

Thanks to its good cold workability, use of the aluminium supporting sheet allows the above-mentioned products to be obtained by die forming. The mechanical features of the products are sufficient not to require further product stiffening elements, whether the products are used alone, or applied to a more complex structure.

The bilaminate and the consequent method described above for obtaining products are not free of disadvantages.

A first disadvantage is the fact that the relatively high overall thickness of the bilaminate, mainly consisting of the thickness of the sheet of aluminium, prevents die forming with high definition details. In other words, it is extremely difficult, using normal die forming methods, to obtain a high level of definition for the smallest details.

This disadvantage is particularly felt in the specific sector of gift items, picture frames and the like, since these are for the most part items of limited size, with relief decoration, where the decoration, rather than the shape, is a differentiating element and contributes to attracting the interest of the potential buyer.

The aim of the present invention is, therefore, to overcome the above-mentioned disadvantages.

Accordingly, the present invention provides a bilaminate comprising a precious metal leaf and a supporting sheet on which the precious metal leaf is applied, characterised in that said supporting sheet is made of copper.

Thanks to the fact that the mechanical characteristics of copper are better than those of the materials used until now, use of a copper supporting sheet advantageously allows a bilaminate to be obtained with an overall thickness much smaller than those currently used and, as a result, guarantees improved definition of the relief details on products obtained with the plastic deformation of the bilaminate.

The present invention also relates to a method for making products from the bilaminate.

The technical features of the present invention, in accordance with the above-mentioned aims, are set out in the claims herein and the advantages more clearly illustrated in the detailed description which follows, with reference to the accompanying drawings, which illustrate a preferred embodiment of the invention without limiting the scope of the inventive concept, and in which:
- Figure 1 is a cross-section of a portion of a bilaminate according to the present invention;
- Figure 2 is a schematic side elevation of a processing step for making products from the bilaminate illustrated in Figure 1;
- Figure 3 is a perspective top view with a part in cross-section, of an example of a product made according to the present invention.

With reference to the accompanying drawings, the numeral 1 denotes a bilaminate comprising an upper precious metal leaf 2 and a lower supporting sheet 3 on which the leaf 3 is applied by gluing the precious metal leaf 2. The leaf 2 is made of silver, whilst the lower supporting sheet 3 is copper. Hereinafter reference is made without distinction to precious metal leaf 2 and silver leaf 2.

In this text the term copper also covers any other metal material which may be classed as a copper alloy. Similarly, the term silver covers any material which may be classed as a silver alloy.

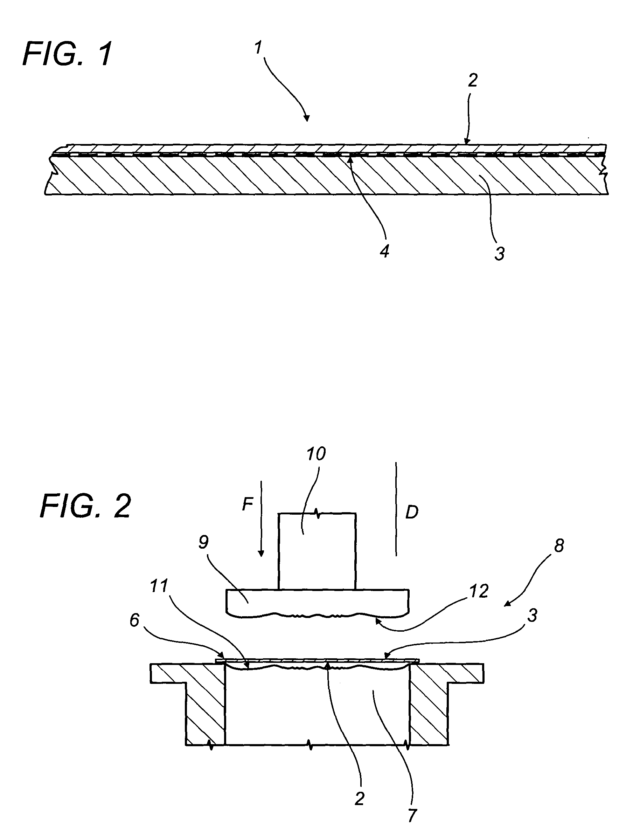

As illustrated in Figure 1, between the supporting sheet 3 and the precious metal leaf 2 there is a layer 4 of an adhesive substance, represented by a dashed line in the figure. Said adhesive substance is applied using known methods, therefore, not described in further detail below.

The thickness of the copper supporting sheet 3 is between 0.07 mm and 0.30 mm and, preferably, between 0.10 and 0.20.

Advantageously, experiments have shown that a particularly effective supporting sheet 3 thickness is approximately 0.10 mm.

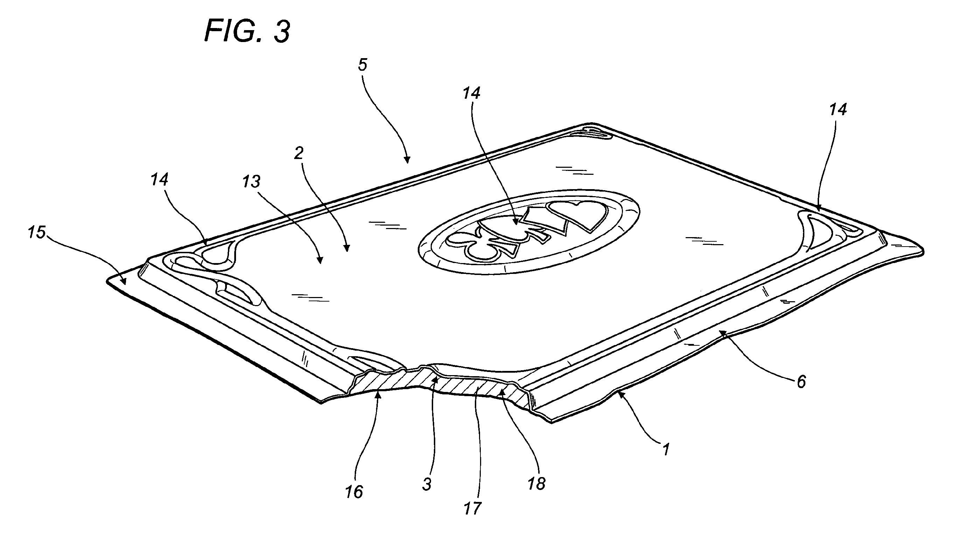

Figure 2 illustrates a step for making a product 5 (visible in Figure 3) from a portion 6 of bilaminate 1. Said portion 6, having a substantially flat shape, is positioned so that it rests on a matrix 7 of a die forming machine 8. The machine 8 also comprises a die 9 positioned above the matrix 7 and supported by a part 10 which moves vertically in a direction D.

The matrix 7 is machined in such a way as to have a concave operating face 11, whilst the die 9, counter-shaped to match the matrix 7, has a convex operating face 12.

The above-mentioned portion 6 of bilaminate 1 is positioned, on the die forming machine 8, with its precious metal leaf 2 facing the matrix 7 and, consequently, with its supporting sheet 3 facing the die 9 which is supported by the mobile part.

Figure 3 illustrates, by way of example, a product 5 obtained from the bilaminate 1 described above.

In particular, the product 5 is a decorative panel, with a substantially rectangular base, for application on a box for a game.

The product 5 comprises an upper surface 13, formed by the bilaminate 1 silver leaf 2 and having relief decorations 14, and an outer edge 15 designed to at least partially engage with a fixing frame, not illustrated.

Below the upper surface 13, the product comprises a filler element 16 which is a setting resin 17. The resin 17 is placed in contact with the bilaminate 1 copper supporting sheet 3.

In practice, starting from the condition illustrated in Figure 2, actuator means of the known type and not illustrated or described move the mobile part 10 in the direction D indicated by the arrow F, bringing the die 9 and the matrix 7 together. Continuing this approach action, with the portion 6 of bilaminate inserted between the matrix 7 and the die 9, it is shaped according to the respective profiles, substantially the same and designed to be placed one on top of another, of the operating faces 11, 12 of the matrix 7 and the die 9, in accordance with the known sheet metal die forming methods.

At the end of the working step described above, the portion 6 of bilaminate 1 has a substantially concave zone 18, visible in Figure 3, on the side of its copper supporting sheet 3.

This concave zone 18 is filled, using methods not illustrated, with the resin 17 which, in fluid form, is poured into the concave zone 18 and, therefore, in direct contact with the copper supporting sheet 3.

As illustrated in Figure 3, after a predetermined time, the resin 17 solidifies and forms the filler element 16, thus forming a single body with the portion 6 of bilaminate 1 to constitute the product 5.

The solidified resin 17 guarantees the product 5 considerable stiffness which is advantageously required due to the limited thickness of the bilaminate 1 and its consequent limited strength.

The term setting resin 17 advantageously refers to an epoxy resin which sets following the action of a catalyst but also, alternatively, catalysable polyurethane resins or hot-cast thermoplastic adhesives.

Therefore, advantageously, thanks to its excellent mechanical properties, the use of copper allows the supporting sheet 3 and, therefore, the bilaminate 1, to be made extremely thin. This thinness, together with the optimum cold workability of copper, guarantees the achievement of a high level of definition for details obtainable by die forming the bilaminate 1.

With reference to the above, advantageously, all of the copper sheets currently available on sale with thicknesses between 0.07 mm and 0.30 mm can be used in an optimum manner to form the bilaminate 1 supporting sheet 3.

The decision to use different thicknesses between 0.07 mm and 0.30 mm for the sheet 3 supporting the precious metal leaf 2, in any case advantageously depends on the specific type of processing to be carried out on the bilaminate 1, as well as the final dimensions of the product 5 to be made from the bilaminate 1.

The invention described can be subject to modifications and variations without thereby departing from the scope of the inventive concept. Moreover, all the details of the invention may be substituted by technically equivalent elements.

To this end, obviously the use of a different precious metal for the leaf, instead of silver, does not differ in substance from what is described above and does not depart from the inventive concept.

## Claims

1. A bilaminate comprising a precious metal leaf (2) and a supporting sheet (3) on which the precious metal leaf (2) is applied, **characterised in that** the supporting sheet (3) is made of copper.

2. The bilaminate according to claim 1, **characterised in that** the thickness of the copper supporting sheet (3) is between 0.07 and 0.30 mm and, preferably, between 0.10 and 0.20 mm.

3. The bilaminate according to claim 1 or 2, **characterised in that** the thickness of the sheet (3) is, in a particularly preferable way, approximately 0.10 mm.

4. The bilaminate according to any of the claims from 1 to 3, **characterised in that** the precious metal is silver.

5. A method for making products from bilaminate, **characterised in that** it uses a bilaminate (1) according to any of the foregoing claims.

6. The method for making products (5) from bilaminate (1), in particular according to the previous claim, **characterised in that** it comprises a step of plastic deformation of the bilaminate (1) to give it a predetermined shape forming at least one substantially concave zone (18).

7. The method according to claim 6 when dependent on one of the claims from 1 to 5, **characterised in that** the bilaminate (1) plastic deformation step comprises a sub-step of forming the bilaminate (1) with a matrix (7) and a relief die (9), said die (9) engaging with the supporting sheet (3).

8. The method according to either of the claims 6 and 7, **characterised in that** it comprises the step of stiffening the product (5) at least at the substantially concave zone (18).

9. The method according to claim 8, **characterised in that** the step of stiffening the product (5) comprises the step of at least partially filling the concave zone (18) with a setting resin (17).

10. A product for making gift items, **characterised in that** it comprises a bilaminate (1) according to any of the claims from 1 to 4.
